(19) Europäisches Patentamt / European Patent Office / Office européen des brevets

(11) **EP 2 452 232 B1**

(12) **EUROPÄISCHE PATENTSCHRIFT**

(45) Veröffentlichungstag und Bekanntmachung des Hinweises auf die Patenterteilung:
**20.04.2016 Patentblatt 2016/16**

(51) Int Cl.:
*G05B 13/04* *(2006.01)*     *G05B 19/418* *(2006.01)*
*G06N 7/00* *(2006.01)*

(21) Anmeldenummer: **10727002.7**

(22) Anmeldetag: **02.07.2010**

(86) Internationale Anmeldenummer:
**PCT/EP2010/059499**

(87) Internationale Veröffentlichungsnummer:
**WO 2011/003837 (13.01.2011 Gazette 2011/02)**

(54) **VERFAHREN ZUR OPTIMIERUNG VON PETRI-NETZ ORCHESTRIERTEN ARBEITSABLÄUFEN FÜR SERVICE-ORIENTIERTE AUTOMATISIERUNGSGERÄTE IN SERVICE-ORIENTIERTEN AUTOMATISIERTEN SYSTEMEN**

METHOD FOR OPTIMIZING PETRI NET ORCHESTRATED PROCESSES FOR SERVICE-ORIENTED AUTOMATION DEVICES IN SERVICE-ORIENTED AUTOMATED SYSTEMS

PROCÉDÉ POUR OPTIMISER DES PHASES DE TRAVAIL ORCHESTRÉES PAR UN RÉSEAU DE PÉTRI POUR DES APPAREILS D AUTOMATISATION ORIENTÉS SERVICE DANS DES SYSTÈMES AUTOMATISÉS ORIENTÉS SERVICE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **08.07.2009 DE 102009026139**

(43) Veröffentlichungstag der Anmeldung:
**16.05.2012 Patentblatt 2012/20**

(73) Patentinhaber: **Schneider Electric Automation GmbH**
**63500 Seligenstadt (DE)**

(72) Erfinder:
• **COLOMBO, Armando Walter**
**63791 Karlstein (DE)**
• **MENDES, Joao Marco**
**P-4490-162 Ponte de Lima (PT)**

(74) Vertreter: **Stoffregen, Hans-Herbert**
**Patentanwalt**
**Friedrich-Ebert-Anlage 11b**
**63450 Hanau (DE)**

(56) Entgegenhaltungen:
• **LEITAO P ET AL: "Decision support system in a service-oriented control architecture for industrial automation" EMERGING TECHNOLOGIES AND FACTORY AUTOMATION, 2008. ETFA 2008. IEEE INTERNATIONAL CONFERENCE ON, IEEE, PISCATAWAY, NJ, USA, 15. September 2008 (2008-09-15), Seiten 1228-1235, XP031344775 ISBN: 978-1-4244-1505-2**
• **RUI FU ET AL: "Fuzzy Petri Net-Based Optimized Semantic Web Service Composition" GRID AND COOPERATIVE COMPUTING, 2008. GCC '08. SEVENTH INTERNATIONAL CONFERENCE ON, IEEE, PISCATAWAY, NJ, USA, 24. Oktober 2008 (2008-10-24), Seiten 496-502, XP031355298 ISBN: 978-0-7695-3449-7**
• **PAULO LEITAO ET AL: "Petri net based Methodology for the Development of Collaborative Production Systems" EMERGING TECHNOLOGIES AND FACTORY AUTOMATION, 2006. ETFA '06. IEE E CONFERENCE ON, IEEE, PI, 1. September 2006 (2006-09-01), Seiten 819-826, XP031082669 ISBN: 978-0-7803-9758-3**

**Beschreibung**

Die Erfindung bezieht sich auf ein Verfahren nach dem Oberbegriff des Anspruchs 1.

Ein Verfahren der eingangs genannten Art ist in dem Aufsatz P. LEITAO u. a.: "Decision support system in a service-oriented control architecture for industrial automation", EMERGING TECHNOLOGIES AND FACTORY AUTOMATION, 2008, ETFA 2008, beschrieben.

Das bekannte Verfahren umfasst die Beschreibung des zu analysierenden und durch die Automatisierungsgeräte auszuführenden Prozessablaufs durch einen Petri-Netz-Formalismus (Petri-Netz), wobei eine Extraktion von Transitions-Invarianten des Petri-Netzes durch Erstellen einer Inzidenz-Matrix des Petri-Netzes erfolgt. Dabei stellen die Transitions-Invarianten Orchestrierungsmöglichkeiten in Form von verfügbaren Prozessen innerhalb des service-orientierten Prozessablaufs dar. Nach einer Validierung der Transitions-Invarianten sowie einer Menge von Orchestrationsmöglichkeiten und ggfs. Rekonfiguration des Petri-Netz-Modells erfolgt ein Formatieren der durch die Validierung erhaltenen Informationen in eine geräte-interpretierbare Semantik, die Konfiguration des Automatisierungsgerätes durch Implementieren der Information in dieses sowie die Ausführung eines optimalen Prozesses.

Im Falle einer nicht eindeutigen Bewertung durch ein lokales Entscheidungssystem wird ein externes Entscheidungs-Unterstützungs-System benötigt. In diesem werden sodann Entscheidungskriterien berechnet. Das externe Entscheidungs-Unterstützungssystem kann als Expertensystem ausgebildet sein. Allerdings wird für die Berechnung der Entscheidungskriterien ein hoher Zeitaufwand benötigt, so dass das Verfahren unter Berücksichtigung von Echtzeit-Entscheidungen nachteilig ist.

Der Aufsatz von RUI FU et al.: "Fuzzy Petri Net-Based Optimized Semantic Web Service Composition" GRID AND COOPERATIVE COMPUTING, 2008, GCC 2008, bezieht sich auf ein optimiertes Verfahren zur Web-Service-Komposition auf der Basis eines semantischen Web. Die Web-Servies werden durch "Fuzzy Horn Clause" beschrieben und ein QoS-orientierter Web-Service-Kompositionsmodell wird durch ein "Fuzzy"-Petri-Netz gebildet.

Im Gegensatz dazu bezieht sich die Erfindung auf das Gebiet der industriellen Automatisierung, insbesondere auf Automatisierungsgeräte, die auf diesem Gebiet verwendet werden wie z. B. programmierbare Verknüpfungssteuerungen (PLC) oder eingebettete Systeme.

Es gilt zu beachten, dass der in dieser Idee dargelegte Lösungsweg durch die bezeichneten Geräte ausgeführt werden kann, aber ebenso durch ein Computersystem, wie beispielsweise herkömmliche Desktop-Computer.

Die bei diesem Verfahren verwendeten Geräte sind Service-orientiert, d.h., dass deren Ressourcen in Form von Services gemeinsam genutzt werden, die von anderen Geräten (Service-Consumer) in dem System abgerufen werden können (dasselbe Konzept wie in Service-orientierten Architekturen und in Geschäftsbereichen verwendeter Datenverarbeitung). Durch Komposition und Orchestrierung können individuelle Services gemeinsam zugeordnet sein, was der herkömmliche Weg ist, Serviceorientierte Systeme zu modellieren und zu entwickeln.

Zur Modellierung, Analyse und Ausführung von ereignisorientierten (event diven) Prozessen wird ein Petri-Netz-Formalismus verwendet. Petri-Netze sind eine Modellierungssprache, basierend auf gerichteten zweiteiligen Graphen (Satz von Transitionen und Stellen), mit exakten mathematischen Definitionen ihrer Struktur und deren Ausführmngssemantiken sowie mit einer gut entwickelten mathematischen Theorie zur Prozessanalyse.

Komposition und Orchestrierung werden als eine Entwicklungsmethode von Service-orientierten Architekturen angesehen, einschließlich im Bereich der industriellen Automatisierung. Daher stehen die meisten Forschungsarbeiten hiermit im Zusammenhang, insbesondere der Weg, neue Orchestrierungen automatisch zu kreieren, die auf verfügbaren Services und einigen Regeln basieren, die festlegen, wie diese Services zu komponieren und dadurch neue Serviceformen zu generieren sind.

Es existieren auf diesem Gebiet etliche Methoden, die die Anwendung von semantischen Services auf intelligente Systeme (wie Multi-Agentensysteme) nutzen, um die Ausbildung von Serviceabläufen zu unterstützen. Sobald Arbeitsabläufe einmal verfügbar sind und da sie meistens alle möglichen Kombinationen von verfügbaren Prozessen (Modi Operandi) beschreiben, werden dennoch Entscheidungen benötigt, den besten Prozess (Modus Operandi) bei einer bestimmten Sachlage auszuwählen. Diese Entscheidungen werden durch Entscheidungsfindungssysteme (Decision-Making: Entscheidung) gemanagt, die Für zahlreiche Situationen eine Lösung bieten.

Bei den bisher bekannten und industriell angewandten Verfahren und Systemen wurden Entscheidungen manuell getroffen. Dies bedeutet, dass dann, wenn eine Entscheidung zu treffen ist, das System wartet und beispielsweise einem Benutzer Services anzeigt, die für eine weitere optimale Ausführung des Prozessablaufs zur Verfügung stehen. Sodann kann ein Benutzer unter Berücksichtigung von Auswahlkriterien geeignete Services auswählen.

Derartige Verfahren und Systeme verzögern allerdings den Prozessablauf.

Alternativ besteht auch die Möglichkeit Produktionsinformationen für ein Werkstück, beispielsweise in einer ein Werkstück transportierenden Palette zu speichern. An jeder Station eines Transport- und/oder Bearbeitungs-Systems werden sodann die für das Werkstück optimalen Produktionsprozesse unter Berücksichtigung von zuvor definierten Auswahlkriterien ausgeführt werden.

Ein solches Verfahren ist allerdings nicht in der Lage, Staus von Werkstücken zu erkennen, so dass Werkstücke nur bis zur nächsten Maschine weitergeleitet werden.

Davon ausgehend liegt der vorliegenden Erfindung die Aufgabe zugrunde, ein Verfahren der eingangs genannten Art derart weiterzubilden, dass Entscheidungen zur Bestimmung und Auswahl eines optimalen Prozessablaufs, d. h. einer optimalen Orchestrierung von Services (Modus Operandi), aus einer Menge von Orchestrierungsmöglichkeiten auf einfache Weise automatisch getroffen werden.

Die Aufgabe wird erfindungsgemäß unter anderem durch die Verfahrensmerkmale des Anspruchs 1 gelöst.

In Service-orientierten Systemen wie Produktionssystemen oder Energieverteilungssystemen gibt es Automatisierungsgeräte mit eingebetteten Services. Komposition und Orchestrierung von Services erlaubt the Generierung von neuen Services.

Es gibt -fast immer- verschiedenen Möglichkeiten, die Services zu Orchestrieren, um einen bestimmten zusammengesetzten (komponierten) Service zu erreichen. Jede Möglichkeit zur Orchestrierung soll im Folgenden "Modus-Operandi" genannt werden. Welcher Modus-Operandi für eine Orchestrierung der geeignete ist, hängt davon ab, welches Service-Ziel und welche Kriterien genutzt werden.

Soll z. B. eine bestimmte Sequenz (Reihenfolge) von aufgerufene Services wie "Open_Contactor" oder "Close_Contactor" in einem Energie-Verteilung-System aufgerufen werden, wird diese basierend auf Kriterien wie z. B. "minimalem Energieverbrauch", schnelle Reaktionszeit" oder "minimale Anzahl Teilnehmer-Geräte" gewählt. Wenn das Service-orientierte System mittels Petri Netze in seiner Struktur und seinem Verhalten formal spezifiziert wird, werden in jedem Fall die verschiedenen Orchestrienungsmöglichkeiten automatisch in dem Petri-Netz-Model abgebildet.

In der vorliegenden Erfindung wird jede Orchestrierungsmöglichkeit als Modus Operandi bezeichnet und ein Verfahren und auch dazugehörige Software-Tools für die Spezifizierung, Validierung sowie die Durchführung einer Auswahl von Modus Operandi beschrieben.

Diese Erfindung erläutert ein Verfahren und Software-Tools zur Bestimmung und Auswahl eines kriterienbewerteten optimalen Prozesses (Modus Operandi) bei Verwendung von Petri-Netzen zur Orchestrierung von optimalen Orchesterierungs-Services in Service-orientierten industriellen Automatisierungsgeräten. Aufgabe ist es, dass das interne Entscheidungsfindungssystem eines Automatisierungsgeräts oder eines anderen geeigneten Computersystems die Fähigkeit besitzt, einen bestimmten Pfad in einem durch ein Petri-Netz orchestrierten Arbeitsablauf (der aus einer Orchestrierung von Services besteht) auszuwählen, wobei verschiedene Kriterien berücksichtigt werden, wie Energieeffizienz-Pfad, Qualität des Services etc. Eine strukturelle Analyse erfolgt auf einer gegebenen Petri-Netz-Orchestrierung, um die Transitions-Invarianten (T-Invarianten) zu erlangen, die Grundlage der optimalen Prozesses (Modi Operandi) sind. Die Modi Operandi (Transitions-Invarianten) werden sodann abgewogen gegen Entscheidungskriterien, die anschließend finale Entscheidungsgewichte liefern, um einen bestimmten durch das Gerät auszuführenden Modus Operandi auszuwählen.

Die Idee betrifft die Anreicherung und Auswahl von ausführbaren Prozessen aus bereits verfügbaren Petri-Netz orchestrierten Arbeitsabläufen. Auswahlkriterien werden als ein Input für Entscheidungsfindungssysteme verwendet, basierend auf verfügbaren Parametern, die für dieses Verfahren als wichtig erachtet werden.

Beispielsweise können diese Parameter Produktions-/ Automatisierungsrichtwerte, Energiebewusstsein, Produktionseffizienz und abhängige Kosten sein.

Die mathematischen Grundlagen von Petri-Netzen können benutzt werden, um viele Eigenschaften und Informationen aus den Abläufen zu extrahieren, die bei der Klassifizierung (und späteren Auswahl) von Prozessen und Verhaltensweisen verwendet werden. Für dieses Verfahren wird eine Strukturanalyse verwendet, die auf linearen algebraischen Funktionen basiert, um mehrere Rückschlüsse aus dem Petri-Netz-Arbeitsablauf zu ziehen. Dies ermöglicht, dass das Gerät oder ein anderes Computergerät, das in der industriellen Automatisierung verwendet wird, während der Laufzeit in der Lage ist, einen definierten Serviceablauf zu analysieren und basierend auf speziellen Entscheidungskriterien den bestmöglichen Modus Operandi auszuwählen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnungen zu entnehmenden bevorzugten Ausführungsformen.

Es zeigen:

Fig. 1    schematische Darstellung eines Produktions- und Transportsystems,

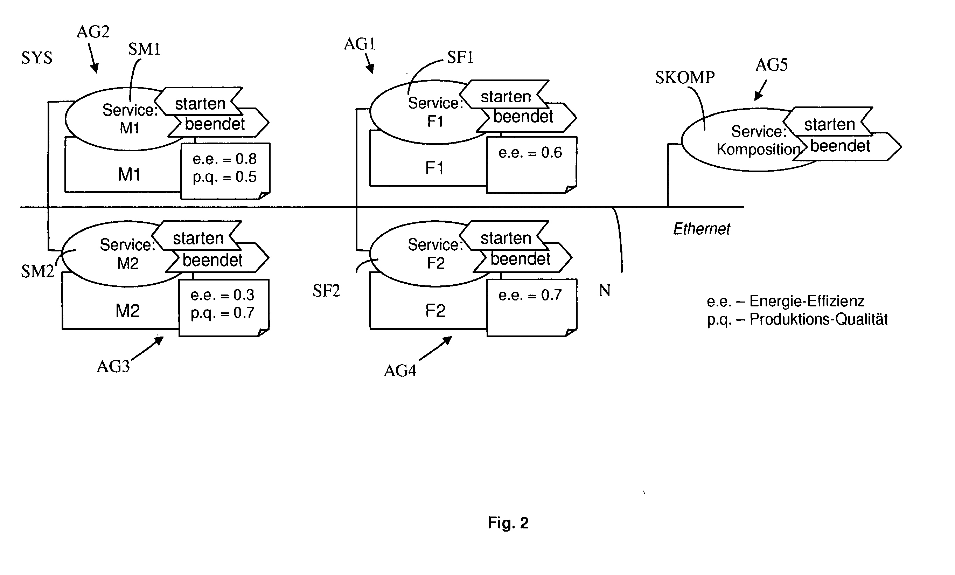

Fig. 2    schematische Darstellung eines Service-orientierten Automatisierungssystems, wobei Service-orientierte Automatisierungsgeräte über ein Netzwerk verbunden sind,

Fig. 3    Übersicht von Verfahrensschritten zur Bestimmung und Auswahl eines optimalen Prozesses basierend auf Petri-Netz-Arbeitsabläufen und Entscheidungskriterien, und

Fig.4    schematische Darstellung eines Petri-Netz-Modells des Produktions- und Transportsystems gemäß Fig. 1 und 2.

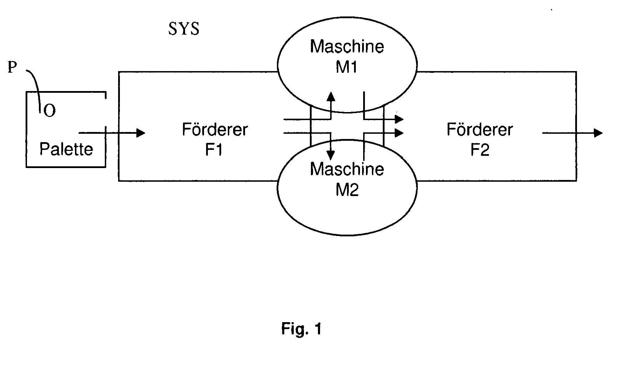

Um neben der formalen Definition das Konzept zu beschreiben, wird ein Beispiel verwendet, wie dieses in Fig. 1 dargestellt ist. Das System SYS umfasst zwei Fördermittel F1, F2, um eine Palette P von Maschine M1 zu Maschine M2 und umgekehrt zu transportieren, die eine Art von Herstellungsverfahren aus den auf den Paletten befindlichen Objekten O wie Werkstücken durchführen.

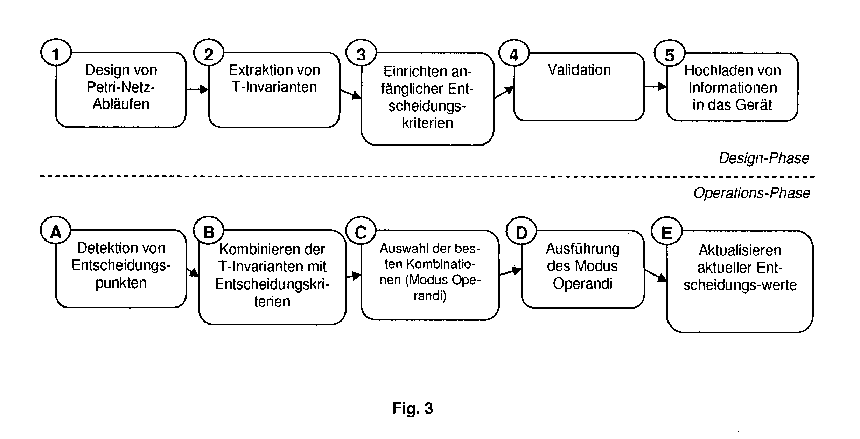

Alle vier Vorrichtungen, d. h. Förderer F1, F2 und Maschine M1, M2 sind über zugeordnete Automatisierungsgeräte AG1, AG2, AG3, AG4 mit einem Netzwerk N verbunden und bieten ihre Fähigkeiten und Betriebsmittel (Ressourcen) in Form von Services S1, S2, S3, S4 an, wie dies in Fig. 3 dargestellt ist.

Jeder Service weist einen Satz von Funktionen (operations) auf: im vorliegenden Fall und aus Vereinfachungsgründen weisen alle Services eine Start- und Beendigungsfunktion auf.

Zudem weist in Fig. 3 die Ausrüstung unten rechts dargestellt mehrere Kriterien auf (die anschließend während des Verfahrens erläutert werden). Ein abschließender Service S5, Komposition genannt, koordiniert das System, indem die verfügbaren Services S1 - S5, der Vorrichtungen logisch verwendet werden.

Fig. 3 stellt den allgemeinen Denkansatz der Idee dar, basierend auf den notwendigen Schritten in der Entwurfsphase (wenn Abläufe definiert und konfiguriert werden) und der Funktionsphase (Abläufe werden während der Laufzeit ausgeführt). Zu beachten ist, dass diese beiden Phasen nur die Arbeitsschritte beinhalten, die für dieses Verfahren wichtig sind.

Die einzelnen Schritte der Fig. 3 werden nachfolgend erläutert:

*1 - Aufbau des Petri-Netz-Ablaufs*

Die zu analysierenden und durch Automatisierungsgeräte AG1 - AG5 auszuführenden Prozesse werden durch Petri-Netz-Formalismus (gemäß der Definition nach T. Murata, "Petri nets: Properties, analysis and applications", in Proceedings of the IEEE, Band 77, Seiten 541 - 580, 1989) beschrieben.

Ein Petri-Netz ist ein 5-Tupel, $PN = (P, T, F, W, M_0)$, wobei

$P = \{p_1, p_2, ..., p_m\}$ ein finiter Satz von Stellen,

$T = \{t_1, t_2, ..., t_n\}$ ein finiter Satz von Transitionen,

$F \subseteq (P \times T) \cup (T \times P)$ ein Satz von Bögen (Flussrelation),

$W: F \rightarrow \{1, 2, ... \}$ eine Gewichtsfunktion, und

$M_0: P \rightarrow \{ 0, 1, 2, ...\}$ eine erste Markierung ist,

$$\text{mit } P \cap T = \varnothing \text{ und } P \cup T \neq \varnothing$$

Ohne die erste Markierung $M_0$ zu spezifizieren ist die Petri-Netz-Struktur gekennzeichnet durch $N = (P, T, F, W)$.

Einige der Transitionen sind verbunden mit der Abfrage oder Bereitstellung von grundlegenden Geräte-Services. Services werden dann getriggert, wenn die entsprechende Transition freigibt/auslöst. In diesem Fall stellt $S: T \rightarrow \{s_1, s_2,..., s_n\}$ den finiten Satz von zu den entsprechenden Transitionen gehörenden Services dar. Ein spezieller Service $s \in S$ kann leer sein, d. h., dass es keinen zugehörigen Service zu der Transition gibt oder ein den Service $s$ und dessen Funktionsabläufe identifizierendes Label *fehlt*. Im Falle eines Services $s$ ist es wichtig zu definieren, ob es sich um eine Anfrage oder ein Angebot handelt.

Andere Erweiterungen und Merkmale von Petri-Netzen können ebenfalls verwendet werden.

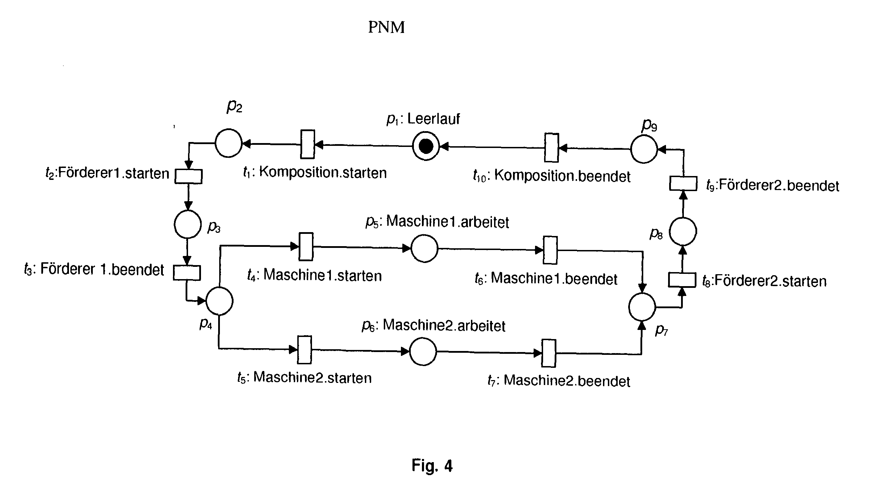

Fig. 4 repräsentiert ein Petri-Netz-Modell PNM, dessen Ausführung durch den Service SKOMP "*Komposition*" angefordert werden kann. Die Transition $t_1$ zeigt den Beginn des Services SKOMP an und die Transition $t_{10}$ dessen Ende. Die Ausführung umfasst die Ausführung des *Förderers F1,* dann die Wahl der Services SM 1, SM2 der *Maschine M1* oder *Maschine M2* an der Stelle $p_4$. Sobald eine Entscheidung hinsichtlich eines der Services SM1, SM2 gefallen ist, wird eine Funktion für *Maschine M1* (*Maschine M2*) über $t_4$ ($t_5$) gestartet und über $t_6$ ($t_7$) beendet. Schließlich wird der Funktionsablauf des *Förderers F2* aufgerufen.

*2 - Extraktion von T-Invarianten*

Zur Extraktion von T-Invarianten des Petri-Netzes PNM wird dessen Struktur $N$ verwendet. Zur Strukturanalyse ist es zunächst wichtig, eine Inzidenzmatrix des Petri-Netzes zu erhalten. Für ein Petri-Netz mit n Transitionen und $m$ Stellen ist die Inzidenzmatrix $A = [a_{ij}]$ eine $n \times m$ Matrix von Ganzzahlen und wird typischerweise vorgegeben *durch* $a_{ij} = a_{ij}^+ - a_{ij}^-$ wobei $a_{ij}^+ = w(i, j)$ das Gewicht des Bogens von Transition i zu dessen Ausgabestelle $j$ ist und $a_{ij} = w(j, i)$ das Gewicht des Bogens zur Transition $i$ von dessen Eingabestelle $j$ ist. $A^T$ repräsentiert die Transponierte der Matrix $A$.

Eine ganzzahlige Lösung $x$ der homogenen Gleichung $A^T x = 0$ wird T-Invariante genannt. Es existieren mehrere Algorithmen zur Lösung der Gleichung und zur Bestimmung des minimalsten Satzes von Lösungen, d.h. T-Invarianten (siehe z.B. C. Amer-Yahia, N. Zerhouni, A. Moudni and M. Ferney, "Some subclasses of Petri nets and the analysis of their structural properties: a new approach", IEEE Transactions on Systems, Man and Cybernetics, Teil A, Band 29, Nr. 2, Seiten. 164-172, 1999).

Gemäß Fig. 4 sind die T-Invarianten $x_1, x_2$ des

Modells PNM bestimmt durch $x_1 = t_1 + t_2 + t_3 + t_4 + t_6 + t_8 + t_9 + t_{10}$ und $x_2 = t_1 + t_2 + t_3 + t_5 + t_7 + t_8 + t_9 + t_{10}$. Diese Lösungen ($x_1$ und $x_2$) repräsentieren die verfügbaren Modi Operandi. In beiden Lösungen $x_1$, $x_2$ wird zunächst über einen Aufruf der *Transition $t_1$ "Komposition.starten"* der Service $s_{komp}$ die "Service-Komposition" bzw. "Orchestrierung" gestartet.

Anschließend wird der Service $s_{F1}$ des Förderes F1 durch die *Transition $t_2$ "Förderer 1.starten"* aufgerufen und durch die Transition $t_3$:" *Förderer 1.beenden*" beendet.

Gemäß der T-Invariante $x_1$ wird über die Transition $t_4$ "*Maschine 1.startern* "der Service $s_{M1}$ der Maschine M1 gestartet und durch die *Transition $t_6$ "Maschine 1.beenden"* beendet.

Alternativ kann gemäß T-Invariante $x_2$ nach Abschluss des Services $s_{F1}$ über die Transition $t_5$ "*Maschine 2.starten"* der Service $sM_2$ der Maschine M2 aufgerufen werden, wodurch die Maschine M2 startet. Der Service $s_{M2}$ kann durch Aufrufen der Transition $t_7$ "*Maschine 2.beendet"* beendet werden.

Beiden T-Invarianten $x_1$, $x_2$ ist gemeinsam, dass nach dem Service $s_{M1}$ oder dem Service $s_{M2}$ über die Transition $t_8$ "*Förderer 2.starten"* der Service $s_{F2}$ des Förderers F2 aufgerufen wird, um den Förderer F2 zu starten. Der Service $s_{F2}$ des Förderers F2 kann über die Transition $t_9$ "*Förderer 2.beenden"* beendet werden.

Das Ende der Ausführung des Services $s_{komp}$ wird über die Transition $t_{10}$ "*Koniposition.beenclet" angezeigt*.

### 3 - Einstellung anfänglicher Entscheidungskriterien

Entscheidungskriterien können für jeden Service $s \in S$ *definiert* werden, indem mehrere Attribute $A_s = \{a_1, a_2, ..., a_k\}$ verwendet werden. Da Attribute möglicherweise aus verschiedenen Messeinheiten bestehen, ist eine Vereinheitlichung erforderlich. In diesem Fall muss das eingesetzte Verfahren jedes Attribut $a \in A$ in einen Fuzzy-Interval von [0,1] konvertieren. Der Wert 0 bedeutet, dass das Attribut Meidungsbedeutung für die Entscheidungskriterien hat und 1 bedeut vollständige Erwägung des Attributs. Werte dazwischen haben demgemäß Fuzzy-Kontribution.

In dem Szenario gemäß Fig. 4 können die mehreren mit den Transitionen verbunden Servicefunktionen Entscheidungskriterien haben, wie z.B. die Attribute der Energieeffizienz ($a_1$ = e. e.) und Produktionsqualität ($a_2$ = p. q.). Beispielsweise stellt Transition $t_4$ den Start der *Maschine M1* dar und deren Funktionsablauf. Ein aktueller Energieeffizienzwert der Maschine M1 ist ($a_1(t_4) = 0.8$ , was bedeutet, dass der Energieverbrauch minimal ist. Die Produktionsqualität der Maschine M1 ist $a_2(t_4) = 0.5$, d. h. eine akzeptable Qualität. Die durch Transition $t_5$ gestartete *Maschine M2* kann einen Energieeffizienzwert von $a_1(t_5) = 0.3$ haben, d. h. weniger energieeffizient als die *Maschine M1*. Ferner ist die Produktionsqualität der Maschine M2 $a_2(t_5) = 0.7$, so dass diese eine bessere Produktionsqualität als *Maschine M1* hat. Die Fördermittel F1, F2 haben nur das Attribut zur Energieeffizienz, in diesem Fall $a_1(t_2) = 0.6$ und $a_1(t_8) = 0.7$.

Entscheidungskriterien können auch bei Betrieb geändert werden, um ein Update der aktuellen involviert ist, das die Attribute entsprechend den vergangenen Situationen abwägen kann.

### 4 - Validierung

Validierung der Modelle PNM plus Entscheidungskriterien wird verwendet, um ihr Verhalten zu studieren und um die Anwendbarkeit der Attribute zu erproben. Zu diesem

Zweck erfolgt eine diskrete Simulation. Im Anschluss an die Simulation können Rückschlüsse gezogen werden, ob das Modell zur Umsetzung zu validieren ist und/oder ob die Modelle mit dem Ergebnis der Simulation rekonfigurierbar sind.

### 5 - Hochladen von Informationen in des Gerät

Da Petri-Netz-Modelle PNM offline entwickelt und analysiert werden, müssen alle Informationen, die das Modellieren betreffen, in eine gerätinterpretierbare Semantik formatiert werden, so dass diese von dem Gerät hochgeladen und interpretiert werden können. Dieser Schritt ist zuständig für die Konfiguration des Geräts mit der zuvor definierten Information (Petri-Netz-Modell, T-Invarianten, Entscheidungskriterien etc.). Nach erfolgreichem Abschluss kann das Gerät gestartet werden (entsprechend der Betriebsphase).

### A - Erkennung von Entscheidungspunkten

Die Erkennung von Entscheidungspunkten (allgemein als Konflikte in Petri-Netzen bezeichnet) kann in dem Moment erfolgen, wenn diese während der Ausführung des Arbeitsablaufs tatsächlich auftritt, oder kann kurz bevor das Modell realisiert werden soll analysiert werden. Auf jeden Fall zeigen die Entscheidungspunkte, wo eine konkrete Antwort des Entscheidungshilfesystems an das Umsetzungssystem des Arbeitsablaufs nötig ist.

In Fig. 4 befindet sich ein einzelner Entscheidungspunkt an Stelle $p_4$, wo entweder *Maschine M1* oder *Maschine M2* gewählt werden muss.

### B - Kombinieren der T-Invarianten mit Entscheidungskriterien

Für einen gegebenen Entscheidungspunkt wird das Entscheidungshilfesystem nun die zuvor berechneten T-Invarianten des Arbeitsablaufs mit den aktuellen Entscheidungskriterien kombinieren.

Für eine gegebene Transition $t \in T$, verbunden mit einem Service $s \in S$, ist der kombinierte Attributwert für $t$ $A(t) = [a_1(t) + a_2(t) + ... + a_k(t)]k^{-1}$. $a_i(t)$ ist der normierte Wert eines Attributs des Services $s$ verbunden mit Transition $t$, wie in Abschnitt "Einstellung anfänglicher Entscheidungskriterien" ausgeführt. Für $t$ müssen $k$ verschiedene Attribute in Betracht gezogen werden.

Der Entscheidungsfaktor einer T-Invarianten (Modus Operandi) $x$, extrahiert von einem Petri-Netz-Arbeitsablauf, ist $F(x) = b\sum(C_x A_x)\sum(C_x)^{-1}$. $C_x$ repräsentiert den Satz der Nicht-Null-Koeffizienten aller $t \in x$. $A_x$ ist der Satz der kombinierten Attributwerte aller Nicht-Null-Koeffizienten $t \in x$. Der Wert $b = [0,1]$ zeigt an, wieviel von dem Entscheidungsfaktor $x$ in Erwägung zu ziehen ist, wobei 0 "nicht in Betracht zu ziehen" und 1 "vollständig in Betracht zu ziehen" bedeutet. Die Funktion $\sum(S)$ setzt die Summe aller Elemente des Satzes $S$ zurück.

Zu beachten ist, dass vor jeder Funktion die Werte der Attribute $A(t)$ gewichtet werden können mit $w = [0,1]$. Dies zeigt, wie effektiv der Attributwert in jeder Gleichung ist.

Beispielsweise werden in Fig. 4 für die Transitionen $t_2, t_4, t_5$ and $t_8$ die beiden Attribute wie in Abschnitte 3 "Einstellung anfänglicher Entscheidungskriterien" in Betracht gezogen. Für $t_2$ den kombinierten Attributwert $A(t_2) = [0.6] \times 1^{-1} = 0.6$, für $t_4$ $A(t_4) = [0.8 + 0.5] \times 2^{-1} = 0.65$, für $t_5$ $A(t_5) = [0.3 + 0.7] \times 2^{-1} = 0.5$ und für $t_8$ $A(t_8) = [0.7] \times 1^{-1} = 0.7$. Die anderen Transitionen haben keine Attribute und ihr kombinierter Attributwert ist 0. Da es zwei Modus Operandi $x_1$ and $x_2$ gibt, sind die Entscheidungsfaktoren $F(x_1) = 1 \times \sum((1, 1, 1) \times (0.6, 0.65, 0.7)) \times \sum(1, 1, 1)^{-1} = 0.65$ und $F(x_2) = 1 \times \sum((1, 1, 1) \times (0.6, 0.5, 0.7)) \times \sum(1,1,1)^{-1} = 0.6$.

*C - Auswahl des besten Modus Operandi*

Sobald die Entscheidungsfaktoren für jede T-Invariante berechnet sind, würde der gewählte Modus Operandi derjenige sein, der der T-Invarianten mit höherem Entscheidungsfaktor entspricht.

Aus der vorangegangenen Berechnung mittels des Beispiels der Fig. 4 wird $x_1$ gewählt, da $F(x_1) > F(x_2)$.

*D - Ausführen des Modus Operandi*

Der gewählte Modus Operandi wird ab dem ersten zugehörigen Service oder ab der tatsächlichen Position im Arbeitsablauf ausgeführt. Ab dem anderen können die nicht gewählten Modi Operandi minimiert werden (z.B. in den Standby-Modus eintreten).

*E - Updaten aktueller Entscheidungswerte*

Nach Ausführung eines Services können neue Werte für die Attribute ermittelt und mit den vorherigen abgeglichen werden. Zum Beispiel wurde beobachtet, dass nach Ausführung der Funktion *Maschine1.starten*, wie in Fig. 4 dargestellt, die Energieeffizienz $a_1$ nicht mehr so hoch ist und dann stattdessen auf 0.6 gesetzt wird.

**Patentansprüche**

1. Verfahren zur Optimierung eines Petri-Netz orchestrierten Prozessablaufs für Service-orientierte Automatisierungsgeräte, umfassend
eine Design-Phase mit folgenden Verfahrensschritten:

   - Beschreibung des zu analysierenden und durch die Automatisierungsgeräte auszuführenden Prozessablaufs durch ein Petri-Netz-Modell (PNM) umfassend einen Satz von Stellen ($p_1 ... p_n$), Transitionen ($t_1 ... t_n$), Bögen (F), Gewichtsfunktionen (W) sowie Markierungen (H), wobei die Transitionen ($t_1 ... t_n$) einer Abfrage und Bereitstellung von Services ($s_1 ... s_n$) eines Automatisierungsgerätes ($AG_1 ... AG_n$) zugeordnet sind,
   - Berechnen von Transitions-Invarianten ($x_1 ... x_n$) des Petri-Netz-Modells (PNM) als Orchestrierungsmöglichkeiten in Form von verfügbaren Prozessen innerhalb des Service-orientierten Prozessablaufs durch Erstellen einer Inzidenzmatrix (A) des Petri-Netz-Modells (PNM) und Analyse des Petri-Netz-Modells (PNM) durch diskrete Simulation und Matrix-Analyse,
   - Definition von anfänglichen Entscheidungskriterien für jeden Service ($s_1 ... s_n$) durch Vergabe von Attributen ($a_1 ... a_n$), wobei jedes Attribut ($a_1 ... a_n$) einen Wert zwischen 0 und 1 erhält;
   - Validierung der Menge von Orchestrierungsmöglichkeiten einschließlich der Entscheidungskriterien und Rekonfiguration des Petri-Netz-Modells auf der Grundlage des Ergebnisses der diskreten Simulation;
   - Formatieren der durch die Validierung erhaltenen Informationen in eine geräteinterpretierbare Semantik;
   - Konfiguration der Automatisierungsgeräte durch Hochladen bzw. Implementieren der berechneten Transitions-Invarianten ($x_1... x_n$) und Entscheidungskriterien für jeden Service ($s_1 ... s_n$) in ein internes Entscheidungsfindungssystem des Automatisierungsgerätes;

   eine Ausführungs-Phase mit folgenden Verfahrensschritten:

   Erkennen von Entscheidungspunkten ($p_4$) als Stellen ($p_1 ... p_n$) des Petri-Netz-Modells (PNM), an denen Transitionen ($t_1 ... t_n$) verschiedener Transitions-Invarianten ($x_1 ... x_n$) geschaltet werden, während der lokalen Ausführung des Prozessablaufs in dem Entscheidungsfindungssystem;

   - Kombination der an dem Entscheidungspunkt ($p_4$) schaltbaren Transitions-Invari-

anten ($x_1$ ... $x_n$) mit den aktuellen Entscheidungskriterien lokal in dem Entscheidungsfindungssystem;

- Berechnung eines Entscheidungsfaktors F(x) für jede an dem Entscheidungspunkt ($p_4$) schaltbare Transitions-Invariante ($x_1$...$x_n$);
- Auswahl der Transitions-Invariante ($x_1$ ... $x_n$) mit höherem Entscheidungsfaktor F(x) als den optimalen Prozess;
- Ausführen des optimalen Prozesses, wobei nach Ausführung eines Services ($s_1$ ... $s_n$) die Attributwerte ($a_1$ ... $a_n$) ermittelt und mit vorherigen Attributwerten abgeglichen werden,
- Aktualisierung der anfänglichen Entscheidungskriterien während des Prozessablaufs zur Optimierung des weiteren Prozessablaufs.

2. Verfahren nach Anspruch 1,
   **dadurch gekennzeichnet,**
   **dass** die Entscheidungskriterien als ein Input für Entscheidungsfindungssysteme verwendet werden, die auf verfügbaren Parametern wie beispielsweise Produktions-/Automatisierungs-Richtwerte, Energieeffizienz, Produktionseffizienz und Kosteneffizienz basieren.

3. Verfahren nach zumindest einem der vorhergehenden Ansprüche,
   **dadurch gekennzeichnet,**
   **dass** die Services freigegeben werden, wenn die entsprechende Transition ausgelöst wird.

4. Verfahren nach zumindest einem der vorhergehenden Ansprüche,
   **dadurch gekennzeichnet,**
   **dass** zur Extraktion der Transitions-Invarianten des Petri-Netzes, d. h. der Grund-Modus Operandi, dessen Struktur verwendet wird, wobei für ein Petri-Netz mit n Transitionen und m Stellen, die Inzidenzmatrix $A = [a_{ij}]$ eine $n \times m$ Matrix von Ganzzahlen ist und typischerweise durch $a_{ij} = a_{ij}^+ - a_{ij}^-$ vorgegeben wird, wobei $a_{ij}^+ = w(i, j)$ das Gewicht des Bogens von Transition $i$ zu dessen Ausgabestelle $j$ ist und $a_{ij}^- = w(j, i)$ das Gewicht des Bogens zur Transition $i$ von dessen Eingabestelle $j$ ist, mit $A^T$ = Transponierte der Matrix $A$.

5. Verfahren nach zumindest einem der vorhergehenden Ansprüche,
   **dadurch gekennzeichnet,**
   das die Erkennung von Entscheidungspunkten durch Analyse des Petri-Netz-Modells erfolgt.

6. Verfahren nach zumindest einem der vorhergehenden Ansprüche,

**dadurch gekennzeichnet,**
**dass** für eine gegebene Transition $t \in T$, welche mit dem Services $s \in S$, verknüpft ist, ein kombinierter Attributwert A (t) für die Transition $t$ nach folgender Formel:

$$A(t) = [a_1(t) + a_2(t) + ... + a_k(t)]k^{-1}$$

mit $a_i(t)$ als normiertem Wert eines Attributs des Services $s$ verbunden mit der Transition $t$ berechnet wird.

7. Verfahren nach zumindest einem der vorhergehenden Ansprüche,
   **dadurch gekennzeichnet,**
   **dass** der Entscheidungsfaktor F(x) einer Transitions-Invariante $x$ nach folgender Formel:

$$F(x) = b\sum(C_x A_x)\sum(C_x)^{-1}$$

berechnet wird, wobei:
$C_x$ den Satz der der Nicht-Null-Koeffizienten aller t $\in x$ repräsentiert; $A_x$ den Satz der kombinierten Attributwerte aller Nicht-Null-Koeffizienten $t \in x$ ist, und der Wert $b = [0,1]$ anzeigt, welcher Anteil von dem Entscheidungsfaktor I (x) in Erwägung zu ziehen ist.

8. Verfahren nach zumindest einem der vorhergehenden Ansprüche,
   **dadurch gekennzeichnet,**
   **dass** Werte der Attribute $A(t)$ mit w = [0,1] gewichtet werden.

**Claims**

1. Method for the optimisation of a Petri Net-orchestrated process sequence for service-orientated automation devices, comprising a design phase with the following process steps:

   - Description of the process sequence to be analysed and carried out by the automation devices by a Petri Net Model (PNM) comprising a set of places ($p_1$ ... $p_n$), transitions ($t_1$ ... $t_n$), arcs (F), weight functions (W) and markings (H), wherein the transitions ($t_1$ ... $t_n$) are assigned to a request and provision of services ($s_1$ ... $s_n$) of an automation device ($AG_1$... $AG_n$),
   - Calculation of transition invariants ($x_1$ ... $x_n$) of the Petri Net Model (PNM) as orchestration possibilities (modus operandi) in the form of available processes within the service-orientated process sequence through creation of an incidence matrix (A) of the Petri Net Model (PNM) and analysis of the Petri Net Model (PNM) through discrete simulation and matrix analysis,
- Definition of initial decision-making criteria for each service ($s_1$ ... $s_n$) through award of attributes ($a_1$ ... $a_n$), wherein each attribute ($a_1$ ... $a_n$) is assigned a value between 0 and 1;
- Validation of the quantity of orchestration possibilities including the decision-making criteria and reconfiguration of the Petri Net Model on the basis of the outcome of the discrete simulation;
- Formatting of the information received through the validation in a semantic that can be interpreted by the devices;
- Configuration of the automation devices through uploading / implementation of the calculated transition invariants ($x_1$ ... $x_n$) and decision criteria for each service ($s_1$ ... $s_n$) in an internal decision-making system of the automation device;

An execution phase with the following process steps:

Determination of decision points ($p_4$) as places ($p_1$ ... $p_n$) of the Petri Net Model (PNM), to which transitions ($t_1$ ... $t_n$) of different transition invariants ($x_1$ ... $x_n$) are linked during the local execution of the process sequence in the decision-making system;

    - Combination of the transition invariants ($x_1$ ... $x_n$) that are switchable at the decision point ($p_4$) with the current decision criteria locally in the decision-making system;
    - Calculation of a decision factor F(x) for each of the transition invariants ($x_1$ ... $x_n$) that can be switched at the decision point ($p_4$);
    - Selection of the transition invariants ($x_1$ ... $x_n$) with a higher decision factor F(x) as the optimal process;
    - Execution of the optimal process, wherein after execution of a service ($s_1$ ... $s_n$) the attribute values ($a_1$ ... $a_n$) are established and compared to the previous attribute values,
    - Updating of the initial decision criteria during the process sequence for optimisation of the further process sequence..

2. Method according to claim 1,
   **characterised in that**
   the decision criteria are used as an input for decision-making systems that are based on available parameters such as, for example, production/automation guideline values, energy efficiency, production efficiency and cost efficiency.

3. Method according to at least one of the above claims,
   **characterised in that**
   the service is released when the corresponding transition is triggered.

4. Method according to at least one of the above claims,
   **characterised in that**
   for extraction of the transition invariants of the Petri Net, i.e., the basic Modus Operandi, its structure is used, wherein for a Petri Net with n transitions and m places, the incidence matrix $A = [a_{ij}]$ is a $n \times m$ matrix of integers and is typically given by $a_{ij} = a_{ij}^+ - a_{ij}^-$, wherein $a_{ij}^+ = w(i, j)$ is the weight of the arc from transition $i$ to its output place $j$ and $a_{ij}^- = w(j, i)$ is the weight of the arc to the transition $i$ from its input place $j$, where $A^T$ = the transpose of the matrix $A$.

5. Method according to at least one of the above claims,
   **characterised in that**
   the decision points are determined through analysis of the Petri Net Model.

6. Method according to at least one of the above claims,
   **characterised in that**
   for a given transition $t \in T$, which is linked to the service $s \in S$, a combined attribute value A (t) is calculated for the transition $t$ according to the following formula:

$$A(t) = [a_1(t) + a_2(t) + ... + a_k(t)]k^{-1}$$

where $a_i(t)$ as the standardised value of an attribute of the service $s$ combined with the transition $t$.

7. Method according to at least one of the above claims,
   **characterised in that**
   the decision factor F(x) of a transition invariant $x$ is calculated using the following formula:

$$F(x) = b\sum(C_xA_x)\sum(C_x)^{-1}$$

wherein:

    $C_x$ represents the set of non-zero coefficients of all $t \in x$;
    $A_x$ is the set of combined attribute values of all non-zero coefficients $t \in x$ and
    the value $b = [0,1]$ displays which proportion of the decision factor I (x) is to be taken into consideration.

8. Method according to at least one of the above claims,
   **characterised in that**
   the values of the attributes $A(t)$ are weighted with w = [0,1].

## Revendications

1. Procédé d'optimisation d'un processus orchestré par un réseau de Petri pour des appareils d'automatisation orientés service, comprenant une phase de conception avec les étapes suivantes :

   - description du processus devant être analysé et effectué par les appareils d'automatisation au moyen d'un modèle de réseau de Petri (PNM) comprenant un ensemble de places $(p_1 ... p_n)$, de transitions $(t_1 ... t_n)$, d'arcs (F), de fonctions de pondération (W) ainsi que de marquages (H), sachant que les transitions $(t_1 ... t_n)$ sont affectées à une demande et mise à disposition de services $(s_1 ... s_n)$ d'un appareil d'automatisation $(AG_1 ... AG_n)$,
   - calcul des invariants de transition $(x_1 ... x_n)$ du modèle de réseau de Petri (PNM) comme possibilités d'orchestration sous forme de processus disponibles dans le processus orienté service en établissant une matrice d'incidence (A) du modèle de réseau de Petri (PNM) et en analysant le modèle de réseau de Petri (PNM) grâce à une simulation discrète et une analyse de matrice,
   - définition des critères de décision initiaux pour chaque service $(s_1 ... s_n)$ en attribuant des attributs $(a_1 ... a_n)$, sachant que chaque attribut $(a_1 ... a_n)$ reçoit une valeur située entre 0 et 1 ;
   - validation de la quantité des possibilités d'orchestration en incluant les critères de décision et reconfiguration du modèle de réseau de Petri sur la base du résultat de la simulation discrète ;
   - formatage des informations obtenues par la validation dans une sémantique pouvant être interprétée par les appareils ;
   - configuration des appareils d'automatisation par téléchargement ou mise en application des invariants de transition calculés $(x_1 ... x_n)$ et des critères de décision pour chaque service $(s_1 ... s_n)$ dans un système interne d'aide à la décision de l'appareil d'automatisation ;

   une phase d'exécution comprenant les étapes suivantes :

   reconnaissance des points de décision $(p_4)$ comme places $(p_1 ... p_n)$ du modèle de réseau de Petri (PNM) auxquels sont connectées des transitions $(t_1 ... t_n)$ de divers invariants de transition $(x_1 ... x_n)$ pendant l'exécution locale du processus dans le système d'aide à la décision ;

   - combinaison des invariants de transition $(x_1 ... x_n)$ au point de décision $(p_4)$ connectables localement avec les critères de décision actuels dans le système d'aide à la décision ;
   - calcul d'un facteur de décision F(x) pour chaque invariant de transition $(x_1 ... x_n)$ connectable au point de décision $(p_4)$ ;
   - sélection de l'invariant de transition $(x_1 ... x_n)$ avec un facteur de décision F(x) supérieur au processus optimal ;
   - exécution du processus optimal, sachant qu'après l'exécution d'un service $(s_1 ... s_n)$, les valeurs d'attribut $(a_1 ... a_n)$ sont déterminées, puis comparées aux précédentes valeurs d'attribut,
   - actualisation des critères de décision initiaux pendant le processus pour l'optimisation du déroulement ultérieur du processus.

2. Procédé selon la revendication 1,
   **caractérisé en ce**
   **que** les critères de décision sont utilisés comme un input pour les systèmes d'aide à la décision, lesquels se basent sur les paramètres disponibles tels que les valeurs de référence de production/d'automatisation, le rendement énergétique, l'efficacité de la production et la rentabilité des coûts.

3. Procédé selon au moins l'une des revendications précédentes,
   **caractérisé en ce**
   **que** les services sont validés lorsque la transition correspondante est déclenchée.

4. Procédé selon au moins l'une des revendications précédentes,
   **caractérisé en ce**
   **que** pour l'extraction des invariants de transition du réseau de Petri, c'est-à-dire la base du mode opératoire dont la structure est utilisée, sachant que pour un réseau de Petri avec n transitions et m places, la matrice d'incidence $A = [a_{ij}]$ est une matrice de nombres entiers $n \times m$ et est généralement définie par $a_{ij} = a_{ij}^+ - a_{ij}^-$, sachant que $a_{ij}^+ = w(i, j)$ est le poids de l'arc de transition $i$ à son point de sortie $j$ et $a_{ij}^- = w(j, i)$ est le poids de l'arc pour la transition $i$ de son point d'entrée $j$, avec $A^T$ = transposée de la matrice $A$.

5. Procédé selon au moins l'une des revendications précédentes,
   **caractérisé en ce**
   **que** la détection des points de décision se fait par analyse du modèle de réseau de Petri.

6. Procédé selon au moins l'une des revendications précédentes,
   **caractérisé en ce**
   **que**, pour une transition donnée $t \in T$, laquelle est associée au service $s \in S$, une valeur d'attribut combinée A (t) pour la transition $t$ est calculée selon la

formule suivante :

$$A(t) = [a_1(t) + a_2(t) + ... + a_k(t)]k^{-1}$$

avec $a_i(t)$ comme valeur normalisée d'un attribut du service $s$ associée à la transition $t$.

7.  Procédé selon au moins l'une des revendications précédentes,
    **caractérisé en ce**
    **que** le facteur de décision F(x) d'un invariant de transition $x$ est calculé selon la formule suivante :

$$F(x) = b\sum(C_xA_x)\sum(C_x)^{-1},$$

sachant que :

$C_x$ représente l'ensemble des coefficients non nuls de tous les $t \in x$ ;
$A_x$ est l'ensemble des valeurs d'attribut combinées de tous les coefficients non nuls $t \in x$, et la valeur $b = [0,1]$ affiche la part du facteur de décision I (x) devant être prise en considération.

8.  Procédé selon au moins l'une des revendications précédentes,
    **caractérisé en ce**
    **que** les valeurs des attributs $A(t)$ sont pondérées par $w = [0,1]$.

Fig. 1

Fig. 2

| ① Design von Petri-Netz-Abläufen → ② Extraktion von T-Invarianten → ③ Einrichten anfänglicher Entscheidungskriterien → ④ Validation → ⑤ Hochladen von Informationen in das Gerät |

*Design-Phase*

*Operations-Phase*

| Ⓐ Detektion von Entscheidungspunkten → Ⓑ Kombinieren der T-Invarianten mit Entscheidungskriterien → Ⓒ Auswahl der besten Kombinationen (Modus Operandi) → Ⓓ Ausführung des Modus Operandi → Ⓔ Aktualisieren aktueller Entscheidungs-werte |

**Fig. 3**

Fig. 4

**EP 2 452 232 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **P. LEITAO.** Decision support system in a service-oriented control architecture for industrial automation. *EMERGING TECHNOLOGIES AND FACTORY AUTOMATION,* 2008
- **RUI FU et al.** Fuzzy Petri Net-Based Optimized Semantic Web Service Composition. *GRID AND COOPERATIVE COMPUTING,* 2008
- **T. MURATA.** Petri nets: Properties, analysis and applications. *Proceedings of the IEEE,* 1989, vol. 77, 541-580
- **AMER-YAHIA ; N. ZERHOUNI ; A. MOUDNI ; M. FERNEY.** Some subclasses of Petri nets and the analysis of their structural properties: a new approach. *IEEE Transactions on Systems, Man and Cybernetics, Teil A,* 1999, vol. 29 (2), 164-172